# FASCICULE DE BREVET EUROPEEN

(11) **EP 3 072 322 B1**
(45) Date de publication et mention de la délivrance du brevet: **01.01.2020**
(21) Numéro de dépôt: 14821726.8
(22) Date de dépôt: 21.11.2014
(51) Int. Cl.: H04W 12/04, H04W 8/20, H04W 4/14, H04L 12/24, H04W 4/50, H04W 4/60, H04W 12/00

(54) **PROCÉDÉ DE NOTIFICATION A DES FINS DE CONFIGURATION D'UN ÉLÉMENT SÉCURISÉ**
BENACHRICHTIGUNGSVERFAHREN ZUM KONFIGURIEREN EINES SICHEREN ELEMENTS
NOTIFICATION METHOD FOR CONFIGURING A SECURE ELEMENT

(30) Priorité: 21.11.2013 FR 1361481
(43) Date de publication de la demande: 28.09.2016
(73) Titulaire: IDEMIA France, 92700 Colombes (FR)
(72) Inventeur: DANREE, Arnaud, F-92700 Colombes (FR); LARIGNON, Guillaume, F-92700 Colombes (FR)
(74) Mandataire: Cabinet Beau de Loménie
(86) Numéro de dépôt international: PCT/FR2014/052989
(87) Numéro de publication internationale: WO 2015/075395

(56) Documents cités:
- EP-A1- 1 530 392
- FR-A1- 2 864 413
- US-A1- 2011 136 482
- US-A1- 2012 036 282
- US-A1- 2012 172 016
- PARK JAEMIN ET AL: "Secure Profile Provisioning Architecture for Embedded UICC", 2013 INTERNATIONAL CONFERENCE ON AVAILABILITY, RELIABILITY AND SECURITY, IEEE, 2 septembre 2013 (2013-09-02), pages 297-303, XP032524210, DOI: 10.1109/ARES.2013.40
- "Reprogrammable SIMs: Technology, Evolution and Implications Final Report", , 25 September 2012 (2012-09-25), pages 1-95, XP055126567, Retrieved from the Internet: URL:http://stakeholders.ofcom.org.uk/binar ies/research/telecoms-research/reprogramma ble-sims.pdf [retrieved on 2014-07-02]

## Description

### Arrière-plan de l'invention

La présente invention se rapporte au domaine de la configuration d'un élément sécurisé incorporé dans un terminal.

L'invention s'applique en particulier et de façon non limitative aux éléments sécurisés de type « UICC » (« Universal Integrated Circuit Card » en terminologie anglo-saxonne) et « eUICC » (« embedded Universal Integrated Circuit Card » en terminologie anglo-saxonne).

Pour plus de renseignement sur les éléments sécurisés « UICC » et « eUICC », l'homme du métier se rapportera respectivement à la norme « ETSI 102.221 » et aux spécifications « ETSI TS 103 383 ».

Dans ce document, la notion de « profil de personnalisation » doit être interprétée au sens large à savoir comme un ensemble d'au moins un fichier et/ou de données. Un profil de personnalisation au sens de l'invention peut notamment comprendre au moins un élément parmi :
- un fichier standard tel que défini par les spécifications du 3GPP ou de l'ETSI pour les UICC et leurs applications et notamment par les normes 3GPP 31.102 et ETSI 102.221 ;
- un fichier propriétaire ;
- un fichier de configuration d'un système d'exploitation ;
- une application Java Card et des éléments de personnalisation associés ;
- des données telles que des clefs de protocole de transport, des paramètres d'algorithme d'authentification, ...

Le profil de personnalisation est utilisé par une application métier pour communiquer avec des entités externes au terminal.

De façon connue, lorsqu'un opérateur souhaite installer un nouveau profil de personnalisation dans un élément sécurisé, cet opérateur utilise un module de configuration d'un serveur distant. Ce module de configuration est apte à envoyer des données à l'élément sécurisé selon un protocole de transport sécurisé, la sécurisation des échanges étant réalisée au moyen d'une clef partagée par ces deux entités. L'opérateur envoie ainsi des données comportant un script d'installation du profil, qui est ensuite exécuté afin d'installer le profil dans l'élément sécurisé.

Cependant, le profil chargé, choisi par l'opérateur, n'est pas toujours le profil permettant d'utiliser le terminal de façon optimale.

Un des objectifs de l'invention est de résoudre un tel problème.

De façon plus générale, l'invention vise des mécanismes permettant de faciliter la configuration d'un élément sécurisé incorporé d'un terminal.

Le document EP 1 530 392 décrit une méthode de gestion de la sécurité d'applications avec un module de sécurité. Le document US 2011/0136482 décrit une méthode de personnalisation d'une carte à puce. Le document US 2012/0036282 décrit un procédé de configuration d'une carte à puce.

### Objet et résumé de l'invention

La présente invention est définie dans les revendications indépendantes. Les revendications dépendantes définissent des modes de réalisation préférés.

A cet effet, la présente invention concerne un procédé de notification à des fins de configuration d'un élément sécurisé incorporé dans un terminal connecté à un réseau, le procédé comprenant les étapes suivantes mises en œuvre par une application de l'élément sécurisé :
- obtention d'au moins un élément d'information utile pour la configuration de l'élément sécurisé stocké dans une mémoire du terminal externe à l'élément sécurisé,
- envoi de l'élément d'information et d'un identifiant de l'élément sécurisé à un système de configuration, et
- obtention de données de configuration provenant du système de configuration, les données de configuration étant fournies à l'élément sécurisé en fonction de l'élément d'information.

L'invention est avantageuse en ce que les données de configuration sont fournies en fonction de l'élément d'information utile pour la configuration de l'élément sécurisé. Ainsi, l'envoi de l'élément d'information permet de choisir les données de configuration les plus appropriés à l'élément sécurisé incorporé dans le terminal. En outre, l'envoi de l'élément d'information permet de choisir les modalités d'envoi des données de configuration les plus appropriées. Ces modalités sont par exemple l'instant d'envoi des données de configuration, et/ou le réseau utilisé pour cet envoi.

Dans un mode de réalisation particulier, l'application est exécutée par un système d'exploitation de l'élément sécurisé.

Dans un mode de réalisation particulier, les étapes d'obtention de l'élément d'information et d'envoi de l'élément d'information et d'un identifiant de l'élément sécurisé sont mises en œuvre lors d'une mise sous tension de l'élément sécurisé et/ou périodiquement.

La mise en œuvre de ces étapes lors d'une mise sous tension de l'élément sécurisé permet de configurer le terminal dès lors qu'il se connecte à un réseau pour la première fois.

La mise en œuvre périodique de ces étapes permet la mise-à-jour des données de configuration en cas de changement d'usage du terminal et/ou en cas de changement de réseau utilisé par le terminal.

Dans un mode de réalisation particulier, l'envoi de l'élément d'information et de l'identifiant de l'élément sécurisé est effectué selon la commande Sim Tool Kit « SEND SMS » ou « OPEN CHANNEL », définie par la norme « 3GPP 31.111 ». La commande «OPEN CHANNEL» est une commande proactive permettant à l'élément sécurisé et au terminal de communiquer.

D'une manière générale l'élément sécurisé peut obtenir l'élément d'information par tout moyen, soit directement par le module du terminal comportant l'élément d'information, soit par un module qui se charge d'obtenir puis d'envoyer l'élément d'information, cet élément d'information étant contenu dans un autre module du terminal. En particulier, l'élément sécurisé peut obtenir l'élément d'information d'une interface de communication du terminal avec le réseau, ou d'une application exécutée par un processeur du terminal, cette application étant externe à l'élément sécurisé. L'interface de communication du terminal avec le réseau est par exemple un module radio ou un module d'accès à un réseau internet ou de téléphone.

Dans un mode de réalisation particulier, l'obtention de l'élément d'information est effectuée sur requête de l'application de l'élément sécurisé. Cette requête peut être envoyée à l'interface de communication ou à l'application exécutée par le processeur du terminal. Cette requête peut être conforme à la commande Sim Tool Kit « PROVIDE LOCAL INFORMATION » définie par la norme « 3GPP 31.111 ».

Dans un mode de réalisation particulier, le terminal effectue les étapes suivantes :
- envoi d'une requête de lecture de l'élément d'information par l'interface de communication à l'application exécutée par le processeur du terminal, et
- envoi de l'élément d'information par l'application exécutée par le processeur du terminal à l'interface de communication,
   ou
- envoi d'une requête de lecture de l'élément d'information par l'application exécutée par le processeur du terminal à l'interface de communication, et
- envoi de l'élément d'information par l'interface de communication à l'application exécutée par le processeur du terminal.

Dans un mode particulier de réalisation, les différentes étapes du procédé de notification sont déterminées par des instructions de programmes d'ordinateur.

En conséquence, l'invention vise aussi un premier programme d'ordinateur sur un support d'informations (ou support d'enregistrement), ce premier programme étant susceptible d'être mis en œuvre dans un élément sécurisé ou plus généralement dans un ordinateur et éventuellement un deuxième programme d'ordinateur sur un support d'information étant susceptible d'être mis en oeuvre dans un terminal ou plus généralement dans un ordinateur, ces programmes comportant des instructions adaptées à la mise en œuvre des étapes d'un procédé de notification tel que défini ci-dessus.

Ces programmes peuvent utiliser n'importe quel langage de programmation, et être sous la forme de code source, code objet, ou de code intermédiaire entre code source et code objet, tel que dans une forme particulièrement compilée, ou dans n'importe quelle autre forme souhaitable.

L'invention vise aussi un premier support d'information (ou support d'enregistrement) lisible par un élément sécurisé ou plus généralement par un ordinateur, et comportant des instructions d'un premier programme d'ordinateur tel que mentionné ci-dessus.

L'invention vise aussi un deuxième support d'information (ou support d'enregistrement) lisible par un terminal ou plus généralement par un ordinateur, et comportant des instructions d'un deuxième programme d'ordinateur tel que mentionné ci-dessus.

Les supports d'informations peuvent être n'importe quelle entité ou dispositif capable de stocker les programmes. Par exemple, les supports peuvent comporter un moyen de stockage, tel qu'une mémoire non volatile réinscriptible (de type « EEPROM » ou « Flash NAND » par exemple), ou tel qu'une « ROM », par exemple un « CD ROM » ou une « ROM » de circuit microélectronique, ou encore un moyen d'enregistrement magnétique, par exemple une disquette (« floppy disc ») ou un disque dur.

D'autre part, les supports d'informations peuvent être des supports transmissibles tel que des signaux électriques ou optiques, qui peuvent être acheminés via des câbles électriques ou optiques, par radio ou par d'autres moyens. Les programmes selon l'invention peuvent être en particulier téléchargés sur un réseau de type Internet.

Alternativement, les supports d'informations peuvent être des circuits intégrés dans lesquels les programmes sont incorporés, les circuits étant adaptés pour exécuter ou pour être utilisés dans l'exécution du procédé en question.

L'invention concerne en outre un élément sécurisé destiné à être incorporé dans un terminal connecté à un réseau, ledit élément sécurisé comprenant une application comportant :
- des moyens d'obtention d'au moins un élément d'information utile pour la configuration de l'élément sécurisé stocké dans une mémoire du terminal externe à l'élément sécurisé,
- des moyens d'envoi de dudit élément d'information et d'un identifiant de l'élément sécurisé à un système de configuration, et
- des moyens d'obtention de données de configuration provenant du système de configuration, lesdites données de configuration étant fournies à l'élément sécurisé en fonction dudit élément d'information.

Dans un mode de réalisation particulier, l'élément sécurisé est conforme à la norme « ISO 7816 » et apte à traiter des commandes de type « APDU ».

Dans un mode de réalisation particulier, l'élément sécurisé est de type de type « UICC » ou de type « eUICC ».

Dans un mode de réalisation particulier, l'application de l'élément sécurisé est exécutée par un système d'exploitation de l'élément sécurisé.

L'invention concerne en outre un terminal comportant un élément sécurisé tel que défini ci-dessus.

L'invention concerne en outre un procédé de configuration d'un élément sécurisé incorporé dans un terminal connecté à un réseau, le procédé étant mis en œuvre par un système de configuration, le procédé comprenant :
- l'obtention et la mémorisation d'au moins un élément d'information utile pour la configuration de l'élément sécurisé et d'un identifiant de l'élément sécurisé provenant de l'élément sécurisé,
- l'établissement d'un canal de communication sécurisé avec l'élément sécurisé, et
- l'envoi de données de configuration à l'élément sécurisé via le canal de communication, les données de configuration étant fournies à l'élément sécurisé en fonction dudit élément d'information.

Dans un mode de réalisation particulier, les données de configuration sont des données de personnalisation.

Dans un mode de réalisation particulier, l'envoi des données de configuration est effectué selon un protocole comportant une étape de cryptage et/ou de signature.

Dans un mode de réalisation particulier, le protocole est l'un parmi :
- le « Secure Channel Protocol 80 »,
- le « Secure Channel Protocol 81 »,
- le « Secure Channel Protocol 02 », et
- le « Secure Channel Protocol 03 »,
définis par la norme « Global Plateform 2.2 ».

Dans un mode de réalisation particulier, l'élément d'information est l'un parmi :
- le numéro « IMEI » du terminal,
- le numéro « IMEISV » du terminal,
- le pays dans lequel se trouve le terminal,
- ledit réseau,
- la puissance dudit réseau,
- le type de canal de communication supporté par le terminal, et
- le type de porteuse utilisé par le terminal.

Dans un mode de réalisation particulier, l'identifiant de l'élément sécurisé est l'un parmi :
- l' « eUICC ID » défini par la version 1.46 de la spécification « Remote Provisioning Architecture for Embedded UICC » de la « Global System for Mobile Communications Association »,
- l'« ICC ID » défini par la norme « ISO 7812 », et
- l'« IMSI ».

Dans un mode de réalisation particulier, les modalités d'envoi des données de configuration sont choisies en fonction de l'élément d'information.

Dans un mode de réalisation particulier, l'élément d'information est utilisé pour déterminer au moins un des éléments parmi :
- le réseau utilisé pour l'envoi des données de configuration,
- le canal de communication utilisé pour l'envoi des données de configuration,
- la porteuse utilisée pour l'envoi des données de configuration.

Plus généralement, l'élément d'information peut par exemple être utilisé pour déterminer au moins un des éléments parmi :
- un profil de personnalisation adapté au type de terminal,
- un profil de personnalisation adapté au pays dans lequel le terminal est situé,
- l'instant d'envoi des données de configuration,
- le réseau utilisé pour l'envoi des données de configuration,
- le canal de communication utilisé pour l'envoi des données de configuration,
- la porteuse utilisée pour l'envoi des données de configuration.

La détermination d'un profil de personnalisation adapté au type de terminal peut être effectuée lorsque l'élément d'information est le numéro « IMEI » ou « IMEISV » du terminal. La détermination d'un profil de personnalisation adapté au pays dans lequel le terminal est situé peut être effectuée lorsque l'élément d'information est le code « MCC » du terminal. Les données de configuration sont alors des données de personnalisation comportant un script d'installation du profil.

De plus, la détermination de l'instant d'envoi des données de configuration peut être effectuée lorsque l'élément d'information est le code « NMR ». Le module de configuration envoie alors les données de configuration lorsque la couverture du réseau est de bonne qualité. En outre, la détermination du réseau utilisé pour l'envoi des données de configuration peut être effectuée lorsque l'élément d'information est le code « MNC ». De plus, la détermination du canal de communication utilisé pour l'envoi des données de configuration peut être effectuée lorsque l'élément d'information indique les différents types de canaux de communication supportés par le terminal et la détermination de la porteuse peut être effectuée lorsque l'élément d'information indique le type de porteuse pouvant être utilisé par le terminal.

Dans un mode de réalisation particulier, le procédé comprend la détermination (par le système de configuration), à partir dudit au moins un élément d'information, du canal de communication de plus haut débit supporté par l'élément sécurisé (ou par le terminal),
ledit canal de communication de plus haut débit étant utilisé en tant que canal de communication sécurisé lors de l'étape d'envoi des données de configuration à l'élément sécurisé.

Dans un mode de réalisation particulier, le procédé comprend une étape de vérification (par le système de configuration) pour vérifier si un canal de communication dont le débit est au moins égal à une valeur seuil prédéterminée peut être établi avec l'élément sécurisé (ou plus généralement avec le terminal) ou pour vérifier si un canal de communication d'un type prédéterminé peut être établi avec l'élément sécurisé (ou plus généralement avec le terminal), et :
- dans l'affirmative, l'envoi de premières données en tant que données de configuration lors de l'étape d'envoi à l'élément sécurisé ;
- dans la négative, l'envoi de deuxièmes données en tant que données de configuration lors de l'étape d'envoi à l'élément sécurisé, dans lequel les premières données sont de taille (en termes d'espace mémoire) plus importante que les deuxièmes données.

Les premières données et les deuxièmes données sont par exemple des profils de personnalisation.

Le système de configuration peut ainsi adapter les données de configuration qu'il envoie à l'élément sécurisé en fonction du type de canal de communication (ou du protocole de communication) supporté par l'élément sécurisé (ou plus généralement par le terminal dans lequel est incorporé ledit élément sécurisé).

Dans un exemple particulier, le type prédéterminé est le type « https ». En d'autres termes, lors de l'étape de vérification, le système de configuration vérifie si un canal de communication de type https (ou selon le protocole https) peut être établi avec l'élément sécurisé (ou plus généralement avec le terminal). Dans ce cas, les premières données sont par exemple adaptées pour être envoyées selon le protocole https. Par ailleurs, les deuxièmes données sont par exemple adaptées pour être transmise à l'élément sécurisé selon le protocole SMS.

Il est ainsi possible d'optimiser la transmission des données de configuration à l'élément sécurisé.

Les premières données sont par exemple 2, 5, 10, voire 20 fois plus volumineuses en termes de taille de données que les deuxièmes données. Autrement dit, les premières données ont une taille de données N fois plus importante que les deuxièmes données, N étant égal à l'une parmi les valeurs 2, 5, 10, et 20.

Dans un mode de réalisation particulier, le système de configuration détermine, à partir dudit au moins un élément d'information, le type du terminal dans lequel est incorporé l'élément sécurisé. Le terminal peut par exemple être un téléphone mobile (ou plus généralement un terminal mobile de télécommunications) ou un compteur électrique, comme expliqué plus en détail dans la suite de ce document. En fonction du type du terminal ainsi déterminé, le système de configuration peut déterminer au moins l'un des paramètres ci-dessous :
(a) les données de configuration à envoyer à l'élément sécurisé lors de ladite étape d'envoi (en sélectionnant par exemple les premières données ou les deuxièmes données mentionnées ci-avant) ;
(b) le canal de communication, le protocole de communication et/ou la porteuse à utiliser lors de ladite étape d'envoi des données de configuration à l'élément sécurisé.

Dans un mode particulier de réalisation, les différentes étapes du procédé de configuration sont déterminées par des instructions de programmes d'ordinateur.

En conséquence, l'invention vise aussi un programme d'ordinateur sur un support d'informations (ou support d'enregistrement), ce programme étant susceptible d'être mis en œuvre par un système de configuration ou plus généralement dans un ordinateur, ce programme comportant des instructions adaptées à la mise en œuvre des étapes d'un procédé de configuration tel que défini ci-dessus.

Ce programme peut utiliser n'importe quel langage de programmation, et être sous la forme de code source, code objet, ou de code intermédiaire entre code source et code objet, tel que dans une forme particulièrement compilée, ou dans n'importe quelle autre forme souhaitable.

L'invention vise aussi un support d'information (ou support d'enregistrement) lisible par un système de configuration ou plus généralement par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une mémoire non volatile réinscriptible (de type « EEPROM » ou « Flash NAND » par exemple), ou tel qu'une « ROM », par exemple un « CD ROM » ou une « ROM » de circuit microélectronique, ou encore un moyen d'enregistrement magnétique, par exemple une disquette (« floppy disc ») ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

L'invention concerne en outre un système de configuration d'un élément sécurisé incorporé dans un terminal connecté à un réseau, le système de configuration comprenant :
- un module de gestion apte à obtenir au moins un élément d'information utile pour la configuration de l'élément sécurisé et un identifiant de l'élément sécurisé provenant de l'élément sécurisé,
- un module de communication sécurisé avec l'élément sécurisé, le module de communication sécurisé étant apte à établir un canal de communication sécurisé avec l'élément sécurisé,
- une première mémoire apte à mémoriser l'élément d'information et l'identifiant de l'élément sécurisé, et
- un module de configuration apte à envoyer des données de configuration à l'élément sécurisé via le canal de communication, les données de configuration étant fournies à l'élément sécurisé en fonction de l'élément d'information.

Dans un mode de réalisation particulier, le module de communication sécurisé comprend des moyens de décryptage.

Dans un mode de réalisation particulier, le module de configuration comprend :
- des moyens d'envoi de identifiant de l'élément sécurisé à la première mémoire, et
- des moyens de récupération, en réponse à l'envoi, de l'élément d'information.

Dans un mode de réalisation particulier, le module de configuration comprend :
- des moyens d'envoi de l'élément d'information à une seconde mémoire, et
- des moyens de récupération, en réponse audit envoi, des données de configuration.

De plus, l'invention concerne un système comprenant un terminal comportant un élément sécurisé tel que défini ci-dessus, ce terminal et cet élément sécurisé étant aptes à mettre en œuvre un procédé de notification tel que défini ci-dessus, et un système de configuration tel que défini ci-dessus, ce système de configuration étant apte à mettre en oeuvre un procédé de configuration tel que défini ci-dessus.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente, de manière schématique, les architectures matérielles d'un terminal, d'un élément sécurisé et d'un système de configuration conformes à un mode de réalisation de l'invention ;
- la figure 2 représente notamment, sous forme d'un organigramme, les principales étapes d'un procédé de notification et d'un procédé de configuration conformes à un mode de réalisation de l'invention.

### Description détaillée de plusieurs modes de réalisation

La présente invention se rapporte au domaine de la configuration d'un élément sécurisé incorporé dans un terminal et concerne plus particulièrement la configuration d'un tel élément sécurisé par un système de configuration à partir d'éléments d'information transmis par l'élément sécurisé à ce système de configuration.

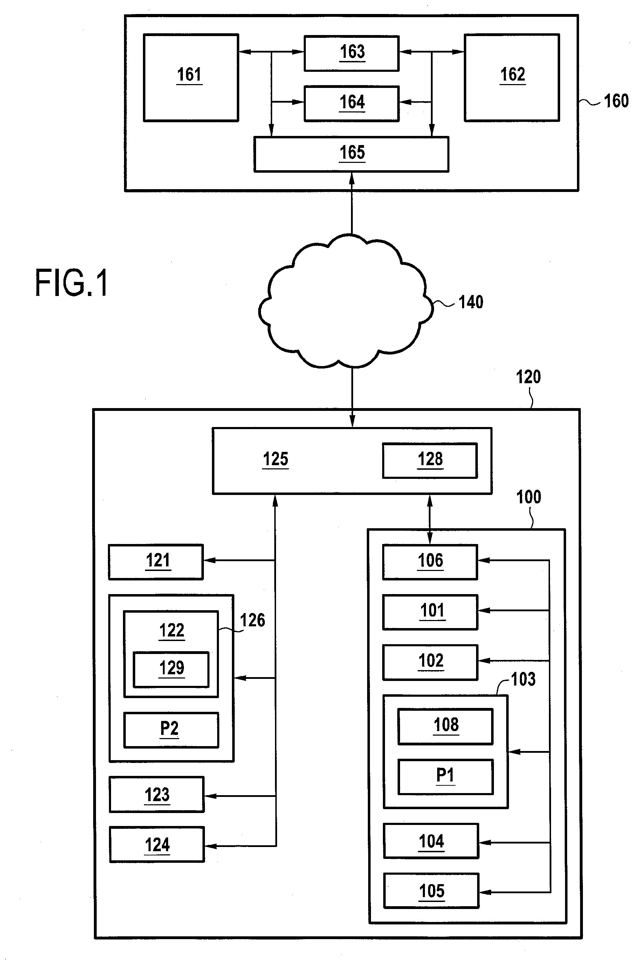

La **figure 1** représente, de manière schématique et selon un premier mode de réalisation, un élément sécurisé 100 incorporé dans un terminal 120 configuré pour pouvoir coopérer, via un réseau 140, avec un système de configuration 160.

L'élément sécurisé 100 est dans un exemple conforme à la norme « ISO 7816 » et apte à traiter des commandes de type « APDU » (« Application Protocol Data Unit » en terminologie anglo-saxonne). Cet élément sécurisé 100 peut être ainsi de type « UICC » (« Universal Integrated Circuit Card » en terminologie anglo-saxonne). En variante, l'élément sécurisé peut être de type « eUICC » (« embedded Universal Integrated Circuit Card » en terminologie anglo-saxonne). En outre, le terminal 120 peut être par exemple un téléphone mobile, un véhicule automobile, une machine à laver, un lampadaire, ou un compteur électrique. De plus, le réseau 140 peut être par exemple un réseau Internet ou un réseau de téléphone.

L'élément sécurisé 100 présente l'architecture conventionnelle d'un ordinateur. Cet élément sécurisé 100 comporte notamment un processeur 101, un système d'exploitation 102, une mémoire morte 103 (de type « ROM »), une mémoire non volatile réinscriptible 104 (de type « EEPROM » ou « Flash NAND » par exemple), une mémoire volatile réinscriptible 105 (de type « RAM »), et une interface de communication 106.

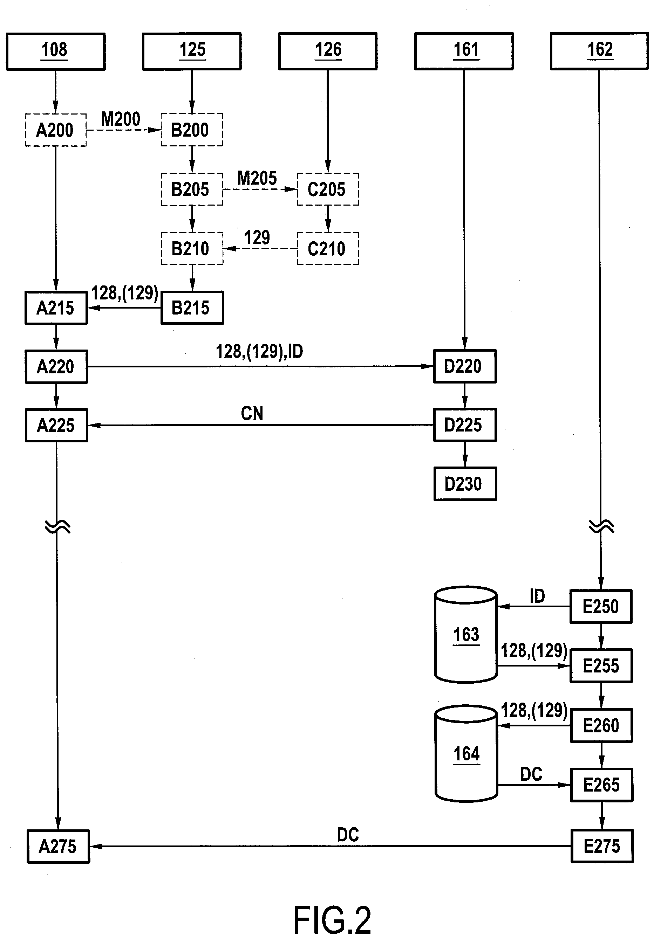

Dans cet exemple, la mémoire morte 103 constitue un support d'informations (ou d'enregistrement) conforme à un mode de réalisation particulier de l'invention. Dans la mémoire morte 103 est stocké un premier programme d'ordinateur P1 permettant à l'élément sécurisé de mettre en œuvre une première partie du procédé de notification conforme à un mode de réalisation particulier de l'invention (cf. figure 2). En variante, le premier programme d'ordinateur P1 est stocké dans la mémoire non volatile réinscriptible 104.

En outre, la mémoire morte 103 stocke une application 108 mise en œuvre par le système d'exploitation 102. En variante, l'application 108 est stockée dans la mémoire non volatile réinscriptible 104. En variante, l'application 108 est stockée dans le système d'exploitation 102.

Le terminal 120 présente également l'architecture conventionnelle d'un ordinateur. Ledit terminal 120 comporte notamment un processeur 121, une mémoire morte 122 (de type « ROM »), une mémoire non volatile réinscriptible 123 (de type « EEPROM » ou « Flash NAND » par exemple), une mémoire volatile réinscriptible 124 (de type « RAM »), et une interface de communication 125 avec le réseau 140 et avec interface de communication 106 de l'élément sécurisé 100.

Dans cet exemple, la mémoire morte 122 constitue un support d'informations (ou d'enregistrement) conforme à un mode de réalisation particulier de l'invention. Dans la mémoire morte 122 est stocké un deuxième programme d'ordinateur P2 permettant au terminal 120 de mettre en œuvre une deuxième partie du procédé de notification conforme à un mode de réalisation particulier de l'invention (cf. figure 2). En variante, le deuxième programme d'ordinateur P2 est stocké dans la mémoire non volatile réinscriptible 123.

De plus, la mémoire morte 122 stocke une application 126 exécutée par le processeur 121. En variante, l'application 126 est stockée dans la mémoire non volatile réinscriptible 123.

Dans un exemple, une mémoire de l'interface de communication 125 stocke un premier élément d'information 128 utile pour la configuration de l'élément sécurisé 100. De plus, dans cet exemple, l'application 126 stocke un deuxième élément d'information 129 utile pour la configuration de l'élément sécurisé 100.

Le système de configuration 160 comporte un module de gestion 161, un module de configuration 162, une première mémoire 163, une seconde mémoire 164, et un module de communication sécurisée 165 avec l'élément sécurisé 100. De plus, le système de configuration 160 stocke un programme P3. Dans un exemple, le système de configuration 160 est inclus dans un serveur distant présentant l'architecture conventionnelle d'un ordinateur. Dans un autre exemple, les modules 161, 162, 165 et mémoires 163, 164 du système de configuration sont répartis dans plusieurs serveurs distants, chacun de ces serveurs présentant l'architecture conventionnelle d'un ordinateur. Dans ce cas, les serveurs distants communiquent entre eux au moyen d'un réseau de communication éventuellement sécurisé.

La **figure 2** représente, toujours selon le premier mode de réalisation, un procédé de notification à des fins de configuration de l'élément sécurisé 100. Les étapes A200, A215, A220, A275 de ce procédé de notification sont mises en œuvre par l'application 108 de l'élément sécurisé 100 exécutant le programme P1 et les étapes B200, B205, C205, B210, C210 et B215 de ce procédé de notification sont mises en œuvre par terminal 120 exécutant le programme P2.

Dans une étape A200, l'application 108 envoie une requête M200 de lecture du premier élément d'information 128 utile pour la configuration de l'élément sécurisé 100 à une interface de communication 125 du terminal 120. Sur réception de cette requête M200, l'interface de communication 125 envoie (B215) le premier élément d'information 128 à l'application 108.

En variante, l'application 108 envoie une requête M200 de lecture du deuxième élément d'information 129 utile pour la configuration de l'élément sécurisé 100. Dans cette variante, l'interface de communication 125 du terminal 120 envoie alors, dans une étape B205, une requête M205 de lecture du deuxième élément d'information 129 à l'application 126 du terminal 120. Sur réception d'une telle requête, l'application 126 envoie (C210) à l'interface de communication 125 le deuxième élément d'information 129. Ensuite, l'interface de communication 125 envoie (B215) le deuxième élément d'information 129 à l'application 108.

En variante, l'application 108 envoie une requête M200 de lecture du premier élément d'information 128 et du deuxième élément d'information 129. Dans cette variante, l'interface de communication 125 du terminal 120 envoie alors, dans une étape B205, une requête M205 de lecture du deuxième élément d'information 129 à l'application 126 du terminal 120. Sur réception d'une telle requête, l'application 126 envoie (C210) à l'interface de communication 125 le deuxième élément d'information 129. Ensuite, l'interface de communication 125 envoie (B215) le premier élément d'information 128 et le deuxième élément d'information 129 à l'application 108.

Dans un deuxième mode de réalisation, l'interface de communication 106 de l'élément sécurisé 100 ne communique pas avec l'interface de communication 125 et communique avec l'application 126. Ce deuxième mode de réalisation est une variante du premier mode de réalisation décrit ci avant et diffère uniquement en ce que le terminal 120 a une autre configuration logique ou matérielle, ceci ayant pour conséquence que l'application 108 de l'élément sécurisé 100 communique avec l'application 126 au lieu de communiquer avec l'interface de communication 125. Ainsi, dans ce mode de réalisation, l'application 108 envoie (A200) une requête M200 de lecture du deuxième élément d'information 129 à l'application 126. Sur réception de cette requête M200, l'application 126 envoie (B215) le deuxième élément d'information 129 à l'application 108. En variante, l'application 108 envoie une requête M200 de lecture du premier élément d'information 128 à l'application 126. Dans cette variante, l'application 126 envoie alors, dans une étape B205, une requête M205 de lecture du premier élément d'information 128 à l'interface de communication 125 du terminal 120. Sur réception d'une telle requête, l'interface de communication 125 envoie (C210) à l'application 126 le premier élément d'information 128. Ensuite, l'application 126 envoie (B215) le premier élément d'information 128 à l'application 108. En variante, l'application 108 envoie une requête M200 de lecture du premier élément d'information 128 et du deuxième élément d'information 129 à l'application 126. Dans cette variante, l'application 126 envoie alors, dans une étape B205, une requête M205 de lecture du premier élément d'information 128 à l'interface de communication 125 du terminal 120. Sur réception d'une telle requête, l'interface de communication 125 envoie (C210) à l'application 126 le premier élément d'information 128. Ensuite, l'application 126 envoie (B215) le premier élément d'information 128 et le deuxième élément d'information 129 à l'application 108.

Dans les deux modes de réalisation, les envois de requêtes et de données entre l'interface de communication 125 et l'application 126 du terminal 100 sont par exemple effectués selon les commandes « AT » définies par la norme « 3GPP TS 27.007 ».

De plus, la requête M200 envoyée par l'application 108 peut être conforme à la commande « Sim Tool Kit PROVIDE LOCAL INFORMATION » définie par la norme « 3GPP 31.111 ».

L'application 108 envoie la requête M200 lors d'une mise sous tension de l'élément sécurisé 100. En variante l'application 108 envoie la requête M200 périodiquement. Dans une autre variante, l'application 108 envoie la requête M200 lors d'une mise sous tension de l'élément sécurisé 100 et périodiquement.

En variante, l'étape A200 n'est pas effectuée et l'interface de communication 125 (ou l'application 126) envoie (B215) l'élément d'information 128 et/ou 129 à l'application 108, lors d'une mise sous tension de l'élément sécurisé 100 et/ou périodiquement, selon une commande « APDU » définie par la norme « ISO 7816 », ou encore selon une commande «TERMINAL PROFILE» définie par la norme « 3GPP TS 31.111 ».

Lorsque l'élément d'information 128 et/ou 129 est obtenu (A215) suite à une requête M200 envoyée selon la commande « Sim Tool Kit PROVIDE LOCAL INFORMATION » définie par la norme « 3GPP 31.111 », cet élément d'information 128 et/ou 129 est le numéro « IMEI » (« International Mobile Equipment Identity » en terminologie anglo-saxonne), ou le numéro « IMEISV » (« International Mobile Equipment Identity Software Version » en terminologie anglo-saxonne), ou le code « MCC » (« Mobile Country Code » en terminologie anglo-saxonne), ou le code « MNC » (« Mobile Network Code » en terminologie anglo-saxonne), ou le code « NMR » (« Network Mesurement Report » en terminologie anglo-saxonne). En variante, cet élément d'information 128 et/ou 129 est une combinaison des numéros et codes cités ci-dessus. Les numéros « IMEI » et « IMEISV », ainsi que les codes « MCC », « MNC » et « NMR » sont par exemple définis par la spécification « 3GPP TS 31.111 ». Les numéros « IMEI » et « IMEISV » sont des identifiants du terminal 120. Les numéros « IMEI » et « IMEISV » comportent un numéro « TAC » (« Type Allocation Code » en terminologie anglo-saxonne) définissant le pays où le terminal 120 a été immatriculé, un numéro « SNR » (« Serial Numéro » en terminologie anglo-saxonne) correspondant au numéro de série, et d'une somme de contrôle. Le code « MCC » correspond au pays dans lequel se trouve le terminal 120. Le code « MNC » définit le réseau 140. En outre, le code « NMR » indique la puissance du réseau 140.

Dans une mise en œuvre particulière, l'élément d'information 128 et/ou 129 indique (dans le byte 17 d'une commande « TERMINAL PROFILE » par exemple) les différents types de canaux de communication supportés par le terminal 120, par exemple pour le protocole « BIP » (« Beaver Indépendant Protocol » en terminologie anglo-saxonne) lorsque l'élément d'information 128 et/ou 129 est obtenu (A215) grâce à une commande «TERMINAL PROFILE » définie par la norme « 3GPP TS 31.111 ».

Dans une mise en œuvre particulière, l'élément d'information 128 et/ou 129 indique (byte 13 d'une commande « TERMINAL PROFILE » par exemple) le type de porteuse pouvant être utilisé par le terminal 120. Cette porteuse est par exemple de type « CSD » (« Circuit Switched Data » en terminologie anglo-saxonne), « GPRS » (« General Packet Radio Service » en terminologie anglo-saxonne), « Bluetooth », « IrDA » (« Infrared Data Association » en terminologie anglo-saxonne), ou « RS 232 ».

Ensuite, dans une étape A220, l'application 108 de l'élément sécurisé 100 envoie l'élément d'information 128 et/ou 129 et un identifiant ID de l'élément sécurisé 100 au module de gestion 161 du système de configuration 160. Dans un exemple, cet envoi est effectué selon la commande Sim Tool Kit « SEND SMS » ou « OPEN CHANNEL », définie par la norme « 3GPP 31.111 ». La commande «OPEN CHANNEL» est une commande proactive permettant à l'élément sécurisé et au terminal de communiquer.

L'identifiant ID de l'élément sécurisé 100 est dans un exemple l' « eUICC ID » défini par la version 1.46 de la spécification « Remote Provisioning Architecture for Embedded UICC » de la « Global System for Mobile Communications Association », l'« ICC ID » défini par la norme « ISO 7812 », ou le l'« IMSI » (« Internai Mobile Subscriber Identity » en terminologie anglo-saxonne).

Dans le cas où la commande Sim Tool Kit « SEND SMS » est utilisée, il n'est pas nécessaire d'envoyer l'identifiant ID de l'élément sécurisé 100, car l'entête du message envoyé par cette commande comporte l'« IMSI ». En effet le réseau 140 connaît l'« IMSI » du terminal 120 lorsque ce terminal 120 est connecté audit réseau 140.

De plus, comme décrit plus en détails ci-après, l'application 108 de l'élément sécurisé 100 obtient, dans une étape A275, via un canal de communication sécurisé, des données de configuration DC provenant du module de configuration 162 du système de configuration 160, ces données de configuration DC étant fournies à l'élément sécurisé 100 en fonction de l'élément d'information 128 et/ou 129.

La **figure 2** représente, selon un mode de réalisation, un procédé de configuration de l'élément sécurisé 100, mis en œuvre par le système de configuration 160 exécutant le programme P3.

Ce procédé comporte une étape D220 d'obtention, par le module de gestion 161, de l'élément d'information 128 et/ou 129 et de l'identifiant ID de l'élément sécurisé 100 envoyé par l'application 108 de l'élément sécurisé 100. Ce procédé comporte en outre une étape D225 d'établissement d'un canal de communication CN sécurisé avec l'élément sécurisé 100.

Ensuite, dans une étape D230, le module de gestion 161 mémorise l'élément d'information 128 et/ou 129 et l'identifiant ID de l'élément sécurisé 100 dans la première mémoire 163.

Au moment de configurer l'élément sécurisé 100, le module de personnalisation 162 envoie, dans une étape E250, l'identifiant ID de l'élément sécurisé 100 à la première mémoire 163.

L'étape E250 est par exemple réalisée après la première mémorisation (D230) de l'élément d'information 128 et/ou 129 et l'identifiant ID de l'élément sécurisé 100 par le module de gestion 161 dans la première mémoire 163. Dans un autre exemple, l'étape E250 est réalisée périodiquement. Dans un autre exemple, l'étape E250 est réalisée après la première mémorisation (D230) et périodiquement.

En réponse à cet envoi de l'étape E250, l'élément d'information 128 et/ou 129 est récupéré (E255) par le module de personnalisation 162. Ensuite, le module de personnalisation 162 envoie, dans une étape E260, l'élément d'information 128 et/ou 129 à la deuxième mémoire 164. En réponse à cet envoi, des données de configuration DC de l'élément sécurisé 100 sont récupérées (E265) par le module de personnalisation 162.

L'étape E265 est suivie d'une étape E275 d'envoi des données de configuration DC par le module de configuration 162 à l'application 108 de l'élément sécurisé 100 via le canal de communication CN.

L'étape E175 d'envoi peut être effectuée selon un protocole comportant une étape de cryptage et/ou une étape de signature. Dans un exemple le protocole est le « Secure Channel Protocol 80 », le « Secure Channel Protocol 81 », le « Secure Channel Protocol 02 », ou le « Secure Channel Protocol 03 ». Ces protocoles sont définis par la norme « Global Platform 2.2 ».

En outre, comme décrit plus en détail ci-après, le module de configuration 132 peut, dans un exemple, tenir compte de l'élément d'information 128, 129 pour choisir les modalités d'envoi des données de configuration DC les plus appropriées. Ces modalités sont par exemple l'instant d'envoi des données de configuration DC, et/ou le réseau utilisé pour cet envoi.

Dans un exemple, les données de configuration DC sont des données de personnalisation et comportent un script d'installation d'un profil de personnalisation. Après l'obtention des données de configuration DC par l'élément sécurisé 100, l'élément sécurisé exécute le script afin d'installer le profil de personnalisation dans l'élément sécurisé. Selon la norme « ETSI TS 103.383 », un profil de personnalisation est une combinaison de structures de fichiers d'applications ou services et de données d'identification et d'authentification. Une fois installé dans l'élément sécurisé 100, ce profil de personnalisation est utilisé par une application métier pour communiquer avec des entités externes au terminal 120.

Dans un exemple, l'élément d'information 128, 129 est le numéro « IMEI » ou « IMEISV » du terminal 120. Le module de configuration 162 récupère (E265) des données de configuration DC permettant d'installer un profil correspondant au type de terminal 120, à partir du numéro « IMEI » ou « IMEISV » du terminal 120.

Si le terminal 120 est un véhicule automobile, le module de configuration 162 détermine que le profil de personnalisation devant être installé est un profil de personnalisation permettant l'envoi de données par un canal de communication haut débit. Ce canal de communication haut débit est par exemple de type « GPRS » (« General Packet Radio Service » en terminologie anglo-saxonne), « UMTS » (« Universal Mobile Télécommunications System » en terminologie anglo-saxonne) ou « HSDPA » (« High Speed Downlink Packet Access » en terminologie anglo-saxonne). Grâce à ce profil de personnalisation et à l'application métier, le véhicule automobile peut proposer un accès Internet ou un service de dépannage à distance.

Si le terminal 120 est un lampadaire ou un compteur électrique, le module de configuration 162 détermine, de préférence à partir de l'élément d'information 128, 19, que le profil de personnalisation devant être installé est un profil de personnalisation utilisant un espace mémoire réduit et permettant uniquement l'envoi de message « SMS » (« Short Message Service » en terminologie anglo-saxonne) par le terminal 120. Grâce à ce profil de personnalisation et à l'application métier, le compteur électrique peut réaliser une télécollecte de données de consommation par message « SMS », ou le lampadaire peut être allumé ou éteint à distance par envoi de messages « SMS ».

Dans un autre exemple, l'élément d'information 128, 129 est le code « MCC » (ou équivalent) du terminal 120. Cela permet au module de configuration 162 de déterminer un profil de personnalisation adapté au pays dans lequel se trouve le terminal 120. En effet, un opérateur téléphonique utilise un profil de personnalisation différent pour chaque pays, chaque profil de personnalisation comportant des algorithmes d'authentification, des filtres de données ou des applications différents pour chaque pays. Ainsi, le passage du terminal 120 d'un pays à un autre est effectué sans difficulté.

Dans un autre exemple, l'élément d'information 128, 129 est le code « MNC » du terminal 120, ce qui permet au module de configuration 162 de connaître le réseau utilisé par le terminal 120 et d'envoyer les données de configuration DC via ce réseau. En outre, si l'élément d'information 128, 129 est le code « NMR », le module de configuration 162 envoie les données de configuration DC que lorsque la couverture du réseau est de bonne qualité.

D'autre part, si l'élément d'information 128, 129 indique les différents types de canaux de communication supportés par le terminal 120 (par exemple pour le protocole « BIP »), le module de configuration 162 peut choisir le canal de communication le plus adapté pour envoyer les données de configuration DC à l'étape E275. Ainsi, le module de configuration peut tenir compte de l'élément d'information 128, 129 pour envoyer les données de configuration DC à l'élément sécurisé 100.

Dans un exemple particulier, le terminal 120 supporte un premier canal de communication à débit important (e.g. haut débit) et un deuxième canal de communication à débit modéré (e.g. faible débit), le premier canal offrant un débit supérieur au débit du deuxième canal. Dans ce cas, le module de configuration 162 (et plus généralement le système de configuration 160) envoie les données de configuration DC à l'application 108 lors de l'étape E275 via le premier canal de communication, c'est-à-dire le canal de communication offrant le débit le plus important. Dans un cas particulier, le module de configuration 162 détermine à partir d'une donnée incluse dans l'élément d'information 128, 129 que le terminal 120 supporte au moins deux canaux de communication offrant des débits différents et sélectionne en conséquence le canal de communication à plus fort débit pour transmettre les données de configuration DC à l'application 108 à l'étape E275.

Dans un mode de réalisation particulier, le module de configuration 162 détermine, à partir de l'élément d'information 128, 129, le canal de communication de plus haut débit supporté par l'élément sécurisé 100 (ou par le terminal 120), et utilise le canal de communication de plus haut débit ainsi déterminé pour envoyer (E275) les données de configuration DC à l'application 102 (et plus généralement à l'élément sécurisé 100).

Dans un exemple particulier, lorsque le terminal 120 supporte un canal de communication à débit important, un premier profil de personnalisation (ou fichier) dit « de grande taille » est transmis à l'étape E275 par le système de configuration 162 à l'application 108. Inversement, lorsque le terminal 120 supporte un canal de communication à débit modéré, un deuxième profil de personnalisation (ou fichier) de plus petite taille est transmis à l'étape E275 par le système de configuration 162 à l'application 108. Le canal de communication à débit important est par exemple un canal fonctionnant selon le protocole https. Le canal de communication à débit modéré est par exemple un canal de communication fonctionnant selon le protocole SMS.

Selon une mise en œuvre particulière, le module de configuration 162 est apte à envoyer (E275) en tant que données de configuration DC à l'application 102 soit un premier profil de personnalisation (ou plus généralement une première donnée) dit « de grande taille », soit un deuxième profil de personnalisation (ou plus généralement une deuxième donnée) dit « de petite taille », la taille du premier profil étant supérieure à la taille du deuxième profil. Par exemple, le premier profil de grande taille est au moins 2, 5, 10 voire 20 fois plus volumineux en termes de taille de données (i.e. en nombre d'octets) que le deuxième profil de petit taille. Dans un exemple particulier, le premier profil de grande taille a une taille de 256 Kbits tandis que le deuxième profil de petite taille à une taille de 8 Kbits.

Selon un exemple particulier, le module de configuration 162 sélectionne parmi le premier et le deuxième profil lequel doit être envoyé (E275) à l'application 102 (ou plus généralement à l'élément sécurisé 100) en fonction du débit du canal de communication supporté par le terminal 120 et/ou du type du canal de communication supporté par le terminal 120, le débit du canal et/ou le type du canal étant de préférence déterminé par le module de configuration 162 à partir de l'élément d'information 128, 129.

Dans un exemple particulier, le système de configuration 162 vérifie si un canal de communication dont le débit est au moins égal à une valeur seuil prédéterminée peut être établi avec l'élément sécurisé 100 (ou plus généralement avec le terminal 120) ou bien vérifie si un canal de communication d'un type prédéterminé peut être établi avec l'élément sécurisé (ou plus généralement avec le terminal). Cette étape de vérification est réalisée de préférence à partir de l'élément d'information 128, 129. Dans le cas où ladite étape de vérification est positive, le module de configuration 162 envoie le premier profil (de grande taille) en tant que données de configuration lors de l'étape d'envoi (E275) à l'élément sécurisé 100. Dans le cas contraire, le module de configuration 162 envoie (E275) le deuxième profil (de petite taille) en tant que données de configuration à l'élément sécurisé 100.

Par exemple, le premier profil de grande taille est particulièrement adapté pour être transmis par un canal de communication selon le protocole https. De plus, le deuxième profil de petite taille est par exemple particulièrement adapté pour être transmis par un canal de communication selon le protocole SMS.

Comme indiqué précédemment, le module de configuration 162 peut tenir compte de l'élément d'information 128, 129 pour envoyer les données de configuration DC à l'élément sécurisé 100 et, plus particulièrement, à l'application 108. Dans un exemple particulier, l'élément d'information 128, 129 renseigne sur le type du terminal 120 (par exemple s'il s'agit d'un téléphone mobile ou d'un compteur électrique). Le module de configuration 120 est ainsi apte, à partir de l'élément d'information 128, 129 à déterminer au moins l'un des paramètres ci-dessous :
(a) les données de configuration DC à envoyer (E275) à l'application 108 (par exemple en choisissant soit un premier profil de personnalisation dit « de grande taille » soit un deuxième profil de personnalisation de plus petite taille) ;
(b) le canal de communication (ou le type du canal), le protocole de communication et/ou la porteuse à utiliser pour envoyer (E275) les données de configuration DC à l'application 108 (de façon à choisir par exemple le canal et/ou le protocole le plus adapté aux capacités du terminal 120).

Dans un exemple particulier, le module de configuration 120 détermine, à partir de l'élément d'information 128, 129 si le terminal 120 est un téléphone mobile (ou plus généralement un terminal mobile de télécommunications) ou un compteur électrique. Le module de configuration 120 adapte ensuite au moins l'un des paramètres (a) et (b) mentionnés ci-dessus lors de l'envoi (E275) des données de configuration DC à l'application 108.

L'adaptation des paramètres (a) et/ou (b) ci-dessus permet d'optimiser l'envoi (E275) des données de configuration DC en fonction notamment des capacités du terminal 120 exécutant l'application 108. Ainsi, un compteur électrique est un appareil dont la fonction première est de mesure la quantité électrique consommée dans un lieu (une habitation, une industrie...). Les compteurs électriques dits intelligents sont par exemple capables de réaliser une télécollecte de données de consommation par message « SMS » et de recevoir également les données de configuration DC via le protocole SMS. En revanche, de tels compteurs électriques ne sont par exemple pas capables de recevoir via le protocole https les données de configuration DC, contrairement aux téléphones mobiles qui ont la capacité de communiquer via le réseau Internet.

Le profil de configuration PC peut aussi être utilisé pour permettre au terminal 120 de communiquer avec un serveur d'emails, afin de se synchroniser avec une messagerie locale.

Un homme du métier comprendra que les modes de réalisation et variantes décrits ci-avant ne constituent que des exemples non limitatifs de mise en œuvre de l'invention. En particulier, l'homme du métier pourra envisager une quelconque combinaison des variantes et modes de réalisation décrits ci-avant afin de répondre à un besoin bien particulier.

## Revendications

1. Procédé de notification à des fins de configuration d'un élément sécurisé (100) incorporé dans un terminal (120) connecté à un réseau (140), ledit procédé comprenant les étapes suivantes mises en œuvre par une application (108) dudit élément sécurisé :
- obtention (A215) d'au moins un élément d'information (128, 129) utile pour la configuration de l'élément sécurisé (100) stocké dans une mémoire du terminal (120) externe à l'élément sécurisé (100),
- envoi (A220) dudit élément d'information (128, 129) et d'un identifiant (ID) de l'élément sécurisé (100) à un système de configuration (160), et
- obtention (A275) de données de configuration (DC) provenant du système de configuration (160), lesdites données de configuration (DC) étant fournies à l'élément sécurisé (100) en fonction dudit élément d'information (128, 129), lesdites données de configuration (DC) étant des données de personnalisation et comportant un script d'installation d'un profil de personnalisation,
dans lequel l'élément d'information (128, 129) est l'un parmi le type de canal de communication supporté par le terminal et le type de porteuse utilisé par le terminal, et est utilisé pour déterminer, par le système de configuration (160), au moins un des éléments parmi :
- le canal de communication utilisé pour l'envoi des données de configuration lorsque l'élément d'information est le type de canal de communication supporté par le terminal,
- la porteuse utilisée pour l'envoi des données de configuration lorsque l'élément d'information est le type de porteuse utilisé par le terminal.

2. Procédé de notification selon la revendication 1, **caractérisé en ce que** l'envoi dudit élément d'information (128, 129) et de l'identifiant (ID) de l'élément sécurisé (100) est effectué selon la commande Sim Tool Kit « SEND SMS » ou « OPEN CHANNEL », définie par la norme 3GPP 31.111.

3. Procédé de notification selon la revendication 1 ou 2, **caractérisé en ce que** l'obtention (A215) dudit élément d'information (128, 129) est effectué sur requête de l'application (108) de l'élément sécurisé (100), la requête étant conforme à la commande Sim Tool Kit « PROVIDE LOCAL INFORMATION » définie par la norme « 3GPP 31.111 ».

4. Elément sécurisé (100) destiné à être incorporé dans un terminal (120) connecté à un réseau (140), ledit élément sécurisé comprenant une application (108) comportant :
- des moyens d'obtention d'au moins un élément d'information (128, 129) utile pour la configuration de l'élément sécurisé (100) stocké dans une mémoire du terminal (120) externe à l'élément sécurisé,
- des moyens d'envoi dudit élément d'information (128, 129) et d'un identifiant (ID) de l'élément sécurisé à un système de configuration (160), et
- des moyens d'obtention de données de configuration (DC) provenant du système de configuration (160), lesdites données de configuration (DC) étant fournies à l'élément sécurisé en fonction dudit élément d'information (128, 129), lesdites données de configuration (DC) étant des données de personnalisation et comportant un script d'installation d'un profil de personnalisation,
dans lequel l'élément d'information (128, 129) est l'un parmi le type de canal de configuration supporté par le terminal et le type de porteuse utilisé par le terminal, et est utilisé pour déterminer, par le système de configuration (160), au moins un des éléments parmi :
- le canal de communication utilisé pour l'envoi des données de configuration lorsque l'élément d'information est le type de canal de communication supporté par le terminal,
- la porteuse utilisée pour l'envoi des données de configuration lorsque l'élément d'information est le type de porteuse utilisé par le terminal.

5. Terminal (120) comportant un élément sécurisé (100) selon la revendication 4.

6. Programme d'ordinateur comportant des instructions pour l'exécution des étapes d'un procédé de notification selon l'une quelconque des revendications 1 à 3 lorsque ledit programme est exécuté par un élément sécurisé (100) incorporé dans un terminal (120).

7. Support d'enregistrement lisible par un élément sécurisé (100) incorporé dans un terminal (120), sur lequel est enregistré un programme d'ordinateur comprenant des instructions pour l'exécution des étapes d'un procédé de notification selon l'une quelconque des revendications 1 à 3.

8. Procédé de configuration d'un élément sécurisé (100) incorporé dans un terminal (120) connecté à un réseau (140), ledit procédé étant mis en œuvre par un système de configuration (160), ledit procédé comprenant :
- l'obtention (D220) et la mémorisation (D230) d'au moins un élément d'information (128, 129) utile pour la configuration de l'élément sécurisé (100) et d'un identifiant (ID) de l'élément sécurisé (100) provenant de l'élément sécurisé (100),
- l'établissement (D225) d'un canal de communication (CN) sécurisé avec l'élément sécurisé (100), et
- l'envoi (E275) de données de configuration (DC) à l'élément sécurisé (100) via ledit canal de communication (CN), lesdites données de configuration (DC) étant fournies à l'élément sécurisé en fonction dudit élément d'information (128, 129), lesdites données de configuration (DC) étant des données de personnalisation et comportant un script d'installation d'un profil de personnalisation,
dans lequel l'élément d'information (128, 129) est l'un parmi le type de canal de communication supporté par le terminal, et le type de porteuse utilisé par le terminal, et est utilisé pour déterminer, par le système de configuration (160), au moins un des éléments parmi :
- le canal de communication utilisé pour l'envoi des données de configuration lorsque l'élément d'information est le type de canal de communication supporté par le terminal,
- la porteuse utilisée pour l'envoi des données de configuration lorsque l'élément d'information est le type de porteuse utilisé par le terminal.

9. Procédé selon la revendication 1 ou 8, **caractérisé en ce que** :
• l'identifiant (ID) de l'élément sécurisé (100) est l'un parmi :
- l' « eUICC ID » défini par la version 1.46 de la spécification « Remote Provisioning Architecture for Embedded UICC » de la « Global System for Mobile Communications Association »,
- l'« ICC ID » défini par la norme « ISO 7812 », et
- l'« IMSI ».

10. Procédé selon l'une quelconque des revendications 8 à 9, comprenant une étape de vérification pour vérifier si un canal de communication dont le débit est au moins égal à une valeur seuil prédéterminée peut être établi avec l'élément sécurisé (100) ou pour vérifier si un canal de communication d'un type prédéterminé peut être établi avec l'élément sécurisé (100), et :
- dans l'affirmative, l'envoi de premières données en tant que données de configuration (DC) lors de l'étape d'envoi (E275) à l'élément sécurisé (100) ;
- dans la négative, l'envoi de deuxièmes données en tant que données de configuration (DC) lors de l'étape d'envoi (E275) à l'élément sécurisé (100), les premières données ayant une taille de données plus importante que les deuxièmes données.

11. Système de configuration (160) d'un élément sécurisé (100) incorporé dans un terminal (120) connecté à un réseau (140), ledit système de configuration comprenant :
- un module de gestion (161) apte à obtenir au moins un élément d'information (128, 129) utile pour la configuration de l'élément sécurisé (100) et un identifiant (ID) de l'élément sécurisé (100) provenant de l'élément sécurisé (100),
- un module de communication (165) sécurisé avec l'élément sécurisé (100), ledit module de communication (165) sécurisé étant apte à établir un canal de communication (CN) sécurisé avec l'élément sécurisé (100),
- une première mémoire (163) apte à mémoriser ledit élément d'information (128, 129) et l'identifiant (ID) de l'élément sécurisé (100), et
- un module de configuration (162) apte à envoyer des données de configuration (DC) à l'élément sécurisé (100) via ledit canal de communication (CN), lesdites données de configuration (DC) étant fournies à l'élément sécurisé (100) en fonction de l'élément d'information (128, 129), lesdites données de configuration (DC) étant des données de personnalisation et comportant un script d'installation d'un profil de personnalisation,
dans lequel l'élément d'information (128, 129) est l'un parmi le type de canal de communication supporté par le terminal et le type de porteuse utilisé par le terminal, et est utilisé pour déterminer, par le système de configuration (160), au moins un des éléments parmi :
- le canal de communication utilisé pour l'envoi des données de configuration lorsque l'élément d'information est le type de canal de communication supporté par le terminal,
- la porteuse utilisée pour l'envoi des données de configuration lorsque l'élément d'information est le type de porteuse utilisé par le terminal.

12. Programme d'ordinateur comportant des instructions pour l'exécution des étapes d'un procédé de configuration selon l'une quelconque des revendications 8 à 10, lorsque ledit programme est exécuté par un système de configuration (160).

13. Support d'enregistrement lisible par un système de configuration (160), sur lequel est enregistré un programme d'ordinateur comprenant des instructions pour l'exécution des étapes d'un procédé de configuration selon l'une quelconque des revendications 8 à 10.

14. Système comprenant un terminal (120) comportant un élément sécurisé (100) selon la revendication 4, ce terminal (120) et cet élément sécurisé (100) aptes à mettre en œuvre un procédé de notification selon l'une quelconque des revendications 1 à 3, et un système de configuration (160) selon la revendication 12, ce système de configuration (160) apte à mettre en œuvre un procédé de configuration selon l'une des revendications 8 à 10.

## Patentansprüche

1. Benachrichtigungsverfahren zu Konfigurationszwecken eines gesicherten Elements (100), das in einem Endgerät (120) eingebaut ist, das mit einem Netzwerk (140) verbunden ist, wobei das Verfahren die folgenden Schritte aufweist, die durch ein Anwenden (108) des gesicherten Elements umgesetzt werden:
- Erhalten (A215) von mindestens einem Informationselement (128, 129), das zum Konfigurieren des gesicherten Elements (100) nützlich ist, das in einem Speicher des Endgeräts (120) außerhalb des gesicherten Elements (100) gespeichert wird,
- Senden (A220) des Informationselements (128, 129) und einer Kennung (ID) des gesicherten Elements (100) an ein Konfigurationssystem (160) und
- Erhalten (A275) von Konfigurationsdaten (DC), die von dem Konfigurationssystem (160) stammen, wobei die Konfigurationsdaten (DC) dem gesicherten Element (100) in Abhängigkeit von dem Informationselement (128, 129) bereitgestellt werden, wobei die Konfigurationsdaten (DC) Personalisierungsdaten sind und ein Installationsskript eines Personalisierungsprofils aufweisen,
wobei das Informationselement (128, 129) eines vom Kommunikationskanaltyp, der von dem Endgerät unterstützt wird, und dem Trägertyp ist, der von dem Endgerät verwendet wird, und verwendet wird, um durch das Konfigurationssystem (160) mindestens eines der Elemente zu bestimmen von:
- dem Kommunikationskanal, der zum Senden der Konfigurationsdaten verwendet wird, wenn das Informationselement der Kommunikationskanaltyp ist, der von dem Endgerät unterstützt wird,
- dem Träger, der zum Senden der Konfigurationsdaten verwendet wird, wenn das Informationselement der Trägertyp ist, der von dem Endgerät verwendet wird.

2. Benachrichtigungsverfahren nach Anspruch 1, **dadurch gekennzeichnet, dass** das Senden des Informationselements (128, 129) und der Kennung (ID) des gesicherten Elements (100) gemäß dem SIM-Toolkit-Befehl "SEND SMS" oder "OPEN CHANNEL", der durch den 3GPP 31.111 Standard definiert ist, durchgeführt wird.

3. Benachrichtigungsverfahren nach Anspruch 1 oder 2, **dadurch gekennzeichnet, dass** das Erhalten (A215) des Informationselements (128, 129) auf Anwendungsanfrage (108) des gesicherten Elements (100) durchgeführt wird, wobei die Anfrage mit dem SIM-Toolkit-Befehl "PROVIDE LOCAL INFORMATION", der durch den 3GPP 31.111 Standard definiert ist, konform ist.

4. Gesichertes Element (100), das dazu bestimmt ist, in einem Endgerät (120) eingebaut zu werden, das mit einem Netzwerk (140) verbunden ist, wobei das gesicherte Element eine Anwendung (108) aufweist, umfassend:
- Mittel zum Erhalten von mindestens einem Informationselement (128, 129), das zum Konfigurieren des gesicherten Elements (100) nützlich ist, das in einem Speicher des Endgeräts (120) außerhalb des gesicherten Elements gespeichert ist,
- Mittel zum Senden des Informationselements (128, 129) und einer Kennung (ID) des gesicherten Elements an ein Konfigurationssystem (160) und
- Mittel zum Erhalten von Konfigurationsdaten (DC), die von dem Konfigurationssystem (160) stammen, wobei die Konfigurationsdaten (DC) dem gesicherten Element in Abhängigkeit von dem Informationselement (128, 129) bereitgestellt werden, wobei die Konfigurationsdaten (DC) Personalisierungsdaten sind und ein Installationsskript eines Personalisierungsprofils aufweisen,
wobei das Informationselement (128, 129) eines vom Konfigurationskanaltyp, der von dem Endgerät unterstützt wird, und dem Trägertyp ist, der von dem Endgerät verwendet wird, und verwendet wird, um durch das Konfigurationssystem (160) mindestens eines der Elemente zu bestimmen von:
- dem Kommunikationskanal, der zum Senden der Konfigurationsdaten verwendet wird, wenn das Informationselement der Kommunikationskanaltyp ist, der von dem Endgerät unterstützt wird,
- dem Träger, der zum Senden der Konfigurationsdaten verwendet wird, wenn das Informationselement der Trägertyp ist, der von dem Endgerät verwendet wird.

5. Endgerät (120), umfassend ein gesichertes Element (100) nach Anspruch 4.

6. Computerprogramm, umfassend Anweisungen für das Ausführen der Schritte eines Benachrichtigungsverfahrens nach einem der Ansprüche 1 bis 3, wenn das Programm von einem gesicherten Element (100), das in einem Endgerät (120) eingebaut ist, ausgeführt wird.

7. Aufzeichnungsmedium, das von einem gesicherten Element (100), das in einem Endgerät (120) eingebaut ist, lesbar ist, auf dem ein Computerprogramm aufgezeichnet ist, das Anweisungen zum Ausführen der Schritte eines Benachrichtigungsverfahrens nach einem der Ansprüche 1 bis 3 aufweist.

8. Konfigurationsverfahren eines gesicherten Elements (100), das in einem Endgerät (120) eingebaut ist, das mit einem Netzwerk (140) verbunden wird, wobei das Verfahren durch ein Konfigurationssystem (160) umgesetzt wird, wobei das Verfahren aufweist:
- das Erhalten (D220) und das Speichern (D230) von mindestens einem Informationselement (128, 129), das zum Konfigurieren des gesicherten Elements (100) nützlich ist, und einer Kennung (ID) des gesicherten Elements (100), die von dem gesicherten Element (100) stammt,
- das Einrichten (D225) eines Kommunikationskanals (CN) , der mit dem gesicherten Element (100) gesichert wird, und
- das Senden (E275) von Konfigurationsdaten (DC) über den Kommunikationskanal (CN) an das gesicherte Element (100), wobei die Konfigurationsdaten (DC) dem gesicherten Element in Abhängigkeit von dem Informationselement (128, 129) bereitgestellt werden, wobei die Konfigurationsdaten (DC) Personalisierungsdaten sind und ein Installationsskript eines Personalisierungsprofils aufweisen,
wobei das Informationselement (128, 129) eines vom Kommunikationskanaltyp, der von dem Endgerät unterstützt wird, und dem Trägertyp ist, der von dem Endgerät verwendet wird, und verwendet wird, um durch das Konfigurationssystem (160) mindestens eines der Elemente zu bestimmen von:
- dem Kommunikationskanal, der zum Senden der Konfigurationsdaten verwendet wird, wenn das Informationselement der Kommunikationskanaltyp ist, der von dem Endgerät unterstützt wird,
- dem Träger, der zum Senden der Konfigurationsdaten verwendet wird, wenn das Informationselement der Trägertyp ist, der von dem Endgerät verwendet wird.

9. Verfahren nach Anspruch 1 oder 8, **dadurch gekennzeichnet, dass**:
• die Kennung (ID) des gesicherten Elements (100) eine ist von:
- der "eUICC ID", die von der Version 1.46 der Spezifikation "Remote Provisioning Architecture for Embedded UICC" der "Global System for Mobile Communications Association" festgelegt ist,
- der "ICCID", die von der Norm "ISO 7812" festgelegt ist, und
- der IMSI.

10. Verfahren nach einem der Ansprüche 8 bis 9, umfassend einen Schritt des Überprüfens, um zu überprüfen, ob ein Kommunikationskanal, dessen Rate mindestens gleich einem vorbestimmten Schwellwert ist, mit dem gesicherten Element (100) eingerichtet werden kann, oder um zu überprüfen, ob ein Kommunikationskanal eines vorbestimmten Typs mit dem gesicherten Element (100) eingerichtet werden kann und:
- wenn ja, dann das Senden von ersten Daten als Konfigurationsdaten (DC) bei dem Schritt des Sendens (E275) an das gesicherte Element (100),
- wenn nein, dann das Senden von zweiten Daten als Konfigurationsdaten (DC) bei dem Schritt des Sendens (E275) an das gesicherte Element (100), wobei die ersten Daten ein größeres Datenvolumen als die zweiten Daten aufweisen.

11. Konfigurationssystem (160) eines gesicherten Elements (100), das in einem Endgerät (120) eingebaut ist, das mit einem Netzwerk (140) verbunden ist, wobei das Konfigurationssystem aufweist:
- ein Verwaltungsmodul (161), das geeignet ist, mindestens ein Informationselement (128, 129), das zum Konfigurieren des gesicherten Elements (100) nützlich ist, und eine Kennung (ID) des gesicherten Elements (100) zu erhalten, die von dem gesicherten Element (100) stammt,
- ein Kommunikationsmodul (165), das mit dem gesicherten Element (100) gesichert ist, wobei das gesicherte Kommunikationsmodul (165) geeignet ist, einen Kommunikationskanal (CN) einzurichten, der mit dem gesicherten Element (100) gesichert ist,
- einen ersten Speicher (163), der geeignet ist, das Informationselement (128, 129) und die Kennung (ID) des gesicherten Elements (100) zu speichern, und
- ein Konfigurationsmodul (162), das geeignet ist, Konfigurationsdaten (DC) über den Kommunikationskanal (CN) an das gesicherte Element (100) zu senden, wobei die Konfigurationsdaten (DC) dem gesicherten Element (100) in Abhängigkeit von dem Informationselement (128, 129) bereitgestellt werden, wobei die Konfigurationsdaten (DC) Personalisierungsdaten sind und ein Installationsskript eines Personalisierungsprofils aufweisen,
wobei das Informationselement (128, 129) eines vom Kommunikationskanaltyp, der von dem Endgerät unterstützt wird, und dem Trägertyp ist, der von dem Endgerät verwendet wird, und verwendet wird, um durch das Konfigurationssystem (160) mindestens eines der Elemente zu bestimmen von:
- dem Kommunikationskanal, der zum Senden der Konfigurationsdaten verwendet wird, wenn das Informationselement der Kommunikationskanaltyp ist, der von dem Endgerät unterstützt wird,
- dem Träger, der zum Senden der Konfigurationsdaten verwendet wird, wenn das Informationselement der Trägertyp ist, der von dem Endgerät verwendet wird.

12. Computerprogramm, umfassend Anweisungen für das Ausführen der Schritte eines Konfigurationsverfahrens nach einem der Ansprüche 8 bis 10, wenn das Programm von einem Konfigurationssystem (160) ausgeführt wird.

13. Aufzeichnungsmedium, das von einem Konfigurationssystem (160) lesbar ist, auf dem ein Computerprogramm aufgezeichnet ist, das Anweisungen zum Ausführen der Schritte eines Konfigurationsverfahrens nach einem der Ansprüche 8 bis 10 aufweist.

14. System, umfassend ein Endgerät (120), das ein gesichertes Element (100) nach Anspruch 4 aufweist, wobei dieses Endgerät (120) und dieses gesicherte Element (100) geeignet sind, um ein Benachrichtigungsverfahren nach einem der Ansprüche 1 bis 3 umzusetzen, und ein Konfigurationssystem (160) nach Anspruch 12 aufweist, wobei dieses Konfigurationssystem (160) geeignet ist, um ein Konfigurationsverfahren nach einem der Ansprüche 8 bis 10 umzusetzen.

## Claims

1. A notification method for configuring a secure element (100) incorporated into a terminal (120) connected to a network (140), said method comprising the following steps implemented by an application (108) of said secure element:
- obtaining (A215) at least one item of information (128, 129) that can be used to configure the secure element (100) stored in a memory of the terminal (120) outside the secure element (100),
- sending (A220) said item of information (128, 129) and an identifier (ID) of the secure element (100) to a configuration system (160), and
- obtaining (A275) configuration data (DC) originating from the configuration system (160), said configuration data (DC) being provided to the secure element (100) depending on said item of information (128, 129), said configuration data (DC) being personalization data and including a personalization profile installation script,
wherein the item of information (128, 129) is one among the type of communication channel supported by the terminal and the type of carrier used by the terminal, and is used to determine, by the configuration system (160), at least one of the elements among:
- the communication channel used to send the configuration data when the item of information is the type of communication channel supported by the terminal,
- the carrier used to send the configuration data when the item of information is the type of carrier used by the terminal.

2. The notification method according to claim 1, **characterized in that** the sending of said item of information (128, 129) and the identifier (ID) of the secure element (100) is done using the Sim Tool Kit command "SEND SMS" or "OPEN CHANNEL", defined by the "3GPP 31.111" standard.

3. The notification method according to claim 1 or 2, **characterized in that** the obtaining (A215) of said item of information (128, 129) is done at the request of the application (108) of the secure element (100), the request being in accordance with the Sim Tool Kit command "PROVIDE LOCAL INFORMATION" defined by the "3GPP 31.111" standard.

4. A secure element (100) intended to be incorporated into a terminal (120) connected to a network (140), said secure element comprising an application (108) including:
- means for obtaining at least one item of information (128, 129) that can be used for the configuration of the secure element (100) stored in a memory of the terminal (120) outside the secure element,
- means for sending said item of information (128, 129) and an identifier (ID) of the secure element to a configuration system (160), and
- means for obtaining configuration data (DC) originating from the configuration system (160), said configuration data (DC) being provided to the secure element depending on said item of information (128, 129), said configuration data (DC) being personalization data and including a personalization profile installation script,
wherein the item of information (128, 129) is one among the type of communication channel supported by the terminal and the type of carrier used by the terminal, and is used to determine, by the configuration system (160), at least one of the elements among:
- the communication channel used to send the configuration data when the item of information is the type of communication channel supported by the terminal,
- the carrier used to send the configuration data when the item of information is the type of carrier used by the terminal.

5. A terminal (120) including a secure element (100) according to claim 4.

6. A computer program including instructions for the execution of the steps of a notification method according to any one of claims 1 to 3, when said program is executed by a secure element (100) incorporated into a terminal (120).

7. A storage medium readable by a secure element (100) incorporated into a terminal (120), on which is stored a computer program comprising instructions for the execution of the steps of a notification method according to any one of claims 1 to 3.

8. A method of configuration of a secure element (100) incorporated into a terminal (120) connected to a network (140), said method being implemented by a configuration system (160), said method comprising:
- the obtaining (D220) and memorizing (D230) of at least one item of information (128, 129) that can be used to configure the secure element (100) and an identifier (ID) of the secure element (100) originating from the secure element (100),
- the establishment (D225) of a secure communication channel (CN) with the secure element (100), and
- the sending (E275) of configuration data (DC) to the secure element (100) via said communication channel (CN), said configuration data (DC) being provided to the secure element depending on said item of information (128, 129), said configuration data (DC) being personalization data and including a personalization profile installation script,
wherein the item of information (128, 129) is one among the type of communication channel supported by the terminal and the type of carrier used by the terminal, and is used to determine, by the configuration system (160), at least one of the elements among:
- the communication channel used to send the configuration data when the item of information is the type of communication channel supported by the terminal,
- the carrier used to send the configuration data when the item of information is the type of carrier used by the terminal.

9. The method according to claim 1 or 8, **characterized in that**:
• the identifier (ID) of the secure element (100) is one of:
- the "eUICC ID" defined by version 1.46 of the specification "Remote Provisioning Architecture for Embedded UICC" of the "Global System for Mobile Communications Association",
- the "ICC ID" defined by the "ISO 7812" standard, and
- the "IMSI".

10. The method according to any one of claims 8 to 9, comprising a step of verification to verify whether or not a communication channel with a speed at least equal to a predetermined threshold value can be established with the secure element (100) or to verify whether or not a communication channel of a predetermined type can be established with the secure element (100), and:
- if so, the sending of first data as configuration data (DC) in the step (E275) of sending to the secure element (100);
- if not, the sending of second data as configuration data (DC) in the step (E275) of sending to the secure element (100), the first data having a larger data size than the second data.

11. A system (160) of configuration of a secure element (100) incorporated into a terminal (120) connected to a network (140), said configuration system comprising:
- a management module (161) able to obtain at least one item of information (128, 129) that can be used to configure the secure element (100) and an identifier (ID) of the secure element (100) originating from the secure element (100),
- a module (165) for secure communication with the secure element (100), said secure communication module (165) being able to establish a secure communication channel (CN) with the secure element (100),
- a first memory (163) able to memorize said item of information (128, 129) and the identifier (ID) of the secure element (100), and
- a configuration module (162) able to send configuration data (DC) to the secure element (100) via said communication channel (CN), said configuration data (DC) being provided to the secure element (100) depending on the item of information (128, 129), said configuration data (DC) being personalization data and including a personalization profile installation script,
wherein the item of information (128, 129) is one among the type of communication channel supported by the terminal and the type of carrier used by the terminal, and is used to determine, by the configuration system (160), at least one of the elements among:
- the communication channel used to send the configuration data when the item of information is the type of communication channel supported by the terminal,
- the carrier used to send the configuration data when the item of information is the type of carrier used by the terminal.

12. A computer program including instructions for the execution of the steps of a configuration method according to any one of claims 8 to 10, when said program is executed by a configuration system (160).

13. A storage medium readable by a configuration system (160), on which is stored a computer program comprising instructions for the execution of the steps of a configuration method according to any one of claims 8 to 10.

14. A system comprising a terminal (120) including a secure element (100) according to claim 4, this terminal (120) and this secure element (100) being able to implement a notification method according to any one of claims 1 to 3, and a configuration system (160) according to claim 12, this configuration system (160) being able to implement a configuration method according to one of claims 8 to 10.
